(19)

Europäisches
Patentamt
European
Patent Office
Office européen
des brevets

(11) **EP 3 495 246 B2**

(12) **NEW EUROPEAN PATENT SPECIFICATION**
After opposition procedure

(45) Date of publication and mention
of the opposition decision:
**26.02.2025  Bulletin 2025/09**

(45) Mention of the grant of the patent:
**15.07.2020  Bulletin 2020/29**

(21) Application number: **18211089.0**

(22) Date of filing: **07.12.2018**

(51) International Patent Classification (IPC):
*B62D 15/02* (2006.01)   *B66F 9/06* (2006.01)
*B62D 1/28* (2006.01)   *B66F 17/00* (2006.01)
*B66F 9/075* (2006.01)

(52) Cooperative Patent Classification (CPC):
**B62D 15/024; B62D 1/283; B66F 9/063;
B66F 9/0755; B66F 9/07568; B66F 17/003;
G05D 1/622;** G05D 2105/28; G05D 2107/70;
G05D 2109/10; G05D 2111/54

(54) **SYSTEM AND METHOD FOR DETERMINING A FIRST STEERING ANGLE OF AN
AGV-AUTOMATED GUIDE VEHICLE**

SYSTEM UND VERFAHREN ZUR BESTIMMUNG EINES ERSTEN LENKWINKELS EINES
AGV-AUTOMATISIERTEN FÜHRUNGSFAHRZEUGS

SYSTÈME ET PROCÉDÉ PERMETTANT DE DÉTERMINER UN PREMIER ANGLE DE BRAQUAGE
D'UN VÉHICULE À GUIDAGE AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2017  SE 1751511**

(43) Date of publication of application:
**12.06.2019  Bulletin 2019/24**

(73) Proprietor: **Toyota Material Handling
Manufacturing Sweden AB
595 81 Mjölby (SE)**

(72) Inventor: **ARNSBY, Mattias
583 32 Linköping (SE)**

(74) Representative: **Zacco Sweden AB
P.O. Box 5581
Löjtnantsgatan 21
114 85 Stockholm (SE)**

(56) References cited:
**US-A- 5 764 014       US-A1- 2002 165 648
US-A1- 2012 072 075**

EP 3 495 246 B2

**Description**

TECHNICAL FIELD

The present disclosure relates to a system and a method for determining a first steering angle of an AGV-Automated Guided Vehicle. It further relates to a method and a system for improving safety when operating an AGV. The present disclosure even further relates to an AGV, to a computer program product and to a computer-readable medium.

BACKGROUND ART

When operating an AGV-Automated Guided Vehicle it is important to know the steering angle of the AGV. The steering angle can, for example, be used by safety systems of the AGV when assuring that no person and/or object is situated in the intended driving path of the AGV. In this respect the steering angle is used for determining the intended driving path of the AGV. For such safety systems it is therefore important that a determined steering angle of the AGV is correct. A wrong steering angle might otherwise lead to a wrong intended driving path and thus to a wrong zone in front of the AGV where the safety system looks for persons and/or objects. A steering angle is to be understood as the angle in relation to a longitudinal axis of a theoretical steering wheel of an AGV. The steering angle is to be understood as to correspond to a heading angle. An AGV with a steered wheel monitoring system which senses a steering angle of the steered wheel is disclosed by the document US 5 764 014.

SUMMARY OF THE INVENTION

It is an objective of the present disclosure to present an alternative way of determining a steering angle of the AGV-Automated Guided Vehicle.

It is an objective of the present disclosure to present a way in which the proper functioning of a steering angle sensor can be assured, and/or in which at least a possible non-proper functioning of the steering angle sensor can be detected.

At least some of the objectives are achieved by a method for determining a first steering angle of an AGV. The method comprises the step of determining a first position and a first orientation of the AGV. The method further comprises moving the AGV. The method even further comprises determining a second position and a second orientation of the AGV. The method yet even further comprises the step of determining a first steering angle of the AGV based on the first position and orientation of the AGV and based on the second position and orientation of the AGV.

This provides the determining of a first steering angle without a dedicated steering angle sensor. Thus, a dedicated steering angle sensor might be dispensed with which might simplify the design of the AGV and save space and cost. Alternatively, an additional way of determining a first steering angle can be provided which might increase redundancy at the AGV. This might, for example, lead to increased safety and/or increased operating functionality in case it is determined that the dedicated steering angle sensor is no longer working properly.

In one example of the method, the first position and/or the first orientation is determined via a navigation unit of the AGV. This provides a specific way of implementation as a navigation unit is already present in several kinds of AGVs. It might further allow the implementation of the method in existing AGVs without the need of further equipment.

In one example of the method, the second position and/or the second orientation is determined via a navigation unit of the AGV.

At least some of the objectives are also achieved by a method for improving safety when operating an AGV. The method comprises the step of determining a first steering angle and a first position and orientation of the AGV according to a method of the present disclosure. The method further comprises the step of determining a second steering angle of the AGV, wherein the determining of the second steering angle is not based on the first position and orientation of the AGV and the second position and orientation of the AGV. The method even further comprises determining whether the first and the second steering angle deviate from each other more than a pre-determined threshold.

This provides a way of independently checking whether the two different methods for determining the first and the second steering angles provide similar results. Thus a proper functioning can be assured.

In one example, the method further comprises performing safety measures when it is determined that the first and second steering angles deviate more than a pre-determined threshold. This can prevent accidents and save costs related to such an accident.

In one example, the method is based on that the steering angle is corresponding to an angle of a non-powered wheel to a transversal line, when the wheel is not altering angle over a predetermined time period t. In one preferred example t is comprised in the range of 1/10 to 2 seconds. In one preferred example the time period t starts when a new value for a rotational speed quote is set between the rotating speeds of two individually powered drive wheels.

The advantage of the above is that the steering angle as a concept can be used for an AGV that has no steerable wheel. This is particularly favourable when a non-powered wheel is a swivel wheel.

At least some of the objectives are also achieved by a system for determining a first steering angle of an AGV. The system comprises means for determining a first position and a first orientation of the AGV. The system further comprises means for moving the AGV. The system even further comprises means for determining a second position and a second orientation of the AGV. The system yet even further comprises means for determining the first steering angle of the AGV based on the first position and orientation of the AGV and based on the second position and orientation of the AGV.

In one embodiment, the means for determining a first position and a first orientation of the AGV comprise a navigation unit.

In one embodiment, the means for determining a second position and a second orientation of the AGV comprise a navigation unit.

In one embodiment, the means for determining a first steering angle of the AGV based on the first position and orientation of the AGV and based on the second position and orientation of the AGV comprise a at least one processor being arranged to determine the first steering angle.

At least some of the objectives are also achieved by a system for improving safety when operating an AGV. The system comprises a system for determining a first steering angle of an AGV according to the present disclosure. The system for improving safety further comprises means for determining a second steering angle of the AGV, wherein the means are arranged to perform the determining of the second steering angle not based on the first position and orientation of the AGV and not based on the second position and orientation of the AGV. The system for improving safety even further comprises means for determining whether the first and the second steering angle deviate more than a pre-determined threshold.

In one embodiment the means for determining a second steering angle of the AGV comprises a steering angle sensor for at least one non-powered wheel, preferably a swivel wheel, of the AGV.

In one embodiment, the means for determining whether the first and the second steering angle deviate more than a pre-determined threshold comprise at least one processor.

In one embodiment the system for improving safety further comprises means for performing safety measures when it is determined that the first and second steering angles deviate more than a pre-determined threshold.

At least some of the objectives are also achieved by an AGV which comprises any of the systems according to the present disclosure.

At least some of the objectives are also achieved by a computer program product comprising instructions which, when the program is executed by a computer, cause the computer to carry out any of the methods according to the present disclosure.

At least some of the objectives are also achieved by a computer-readable medium comprising instructions which, when executed by a computer, cause the computer to carry out any of the methods according to the present disclosure.

The system, the AGV, the computer program product and the computer-readable medium have corresponding advantages as have been described in connection with the corresponding examples of the method according to this disclosure.

Further advantages of the present invention are described in the following detailed description and/or will arise to a person skilled in the art when performing the invention.

BRIEF DESCRIPTION OF THE DRAWINGS

For a more detailed understanding of the present invention and its objects and advantages, reference is made to the following detailed description which should be read together with the accompanying drawings. Same reference numbers refer to same components in the different figures. In the following,

Fig. 1a shows, in a schematic way, an AGV according to one embodiment of the present disclosure;

Fig. 1b shows, in a schematic way, an AGV according to one embodiment of the present disclosure;

Fig. 1c shows, in a schematic way, a non-powered wheel of an AGV including an exemplified angle sensor;

Fig. 2 shows, in a schematic way, a system according to an embodiment of the present disclosure;

Fig. 3a-d show, in a schematic way, the possible orientation of wheels of an embodiment of an AGV;

Fig. 4a-b show, in a schematic way, flowcharts of examples of methods according to the present invention; and

Fig. 5a-b show examples of different travel paths for an AGV for moving from a first position to a second position.

Fig. 6 shows the concept of heading angle.

Fig. 7 shows the concept of heading angle and the relation to steering angle.

DETAILED DESCRIPTION

With AGV is meant an automated guided vehicle. With an AGV is not meant a fork-lift truck that has been upgraded with auto-moving capability. The AGV is a completely autonomous vehicle that has been designed for this purpose. The AGV has no fixed manual operating panel. The AGV has no seat for an operator. The AGV can operate in a fleet of AGV's with a leader AGV creating a train of vehicles. The AGV has at least two wheels that are individually powered. The AGV has no wheel that is steerable around a vertical axis. The AGV has in general a very low vehicle body height compared with a fork-lift truck, floor conveyor or the like. The height of the AGV is in general comprised between the height of a standard pallet and three standard pallets placed on each other. The AGV is meant as an automated vehicle that is used in a warehouse environment for transporting goods. An AGV is a vehicle that due to its own mass or the sum of own mass and carried mass could cause damage to fixed installations and/or humans in an undesired contact situation, e.g. crash.

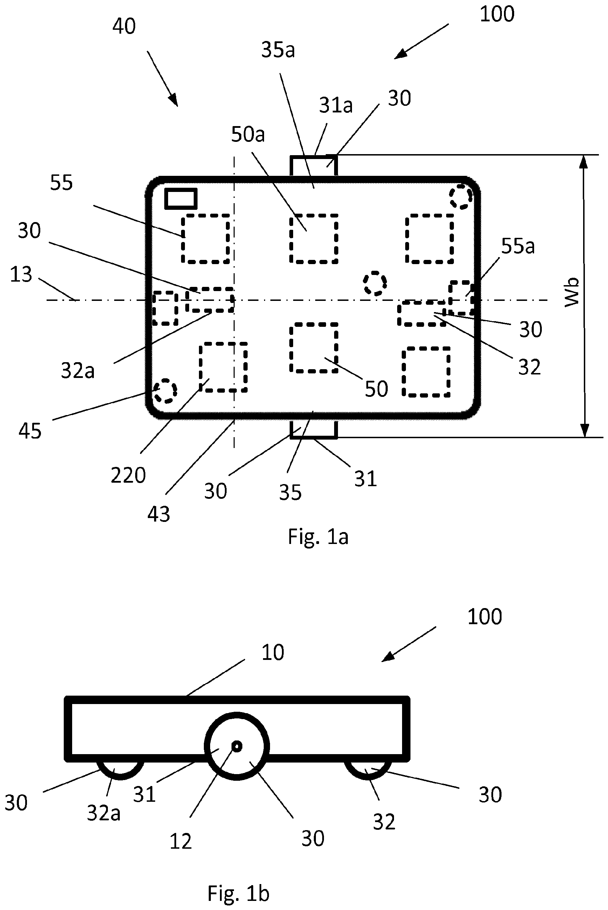

Fig. 1a and 1b shows, in a schematic way, an AGV 100 according to one embodiment of the present disclosure. The AGV comprises an upper surface to be used as a load support member 10. There can be a possibility to raise the upper surface. The AGV 100 comprises at least one ground engaging element 30, such as at least three wheels. The at least three ground engaging element 30 can comprise an individually powered drive wheel. In one example the at least one ground engaging element 30 comprises two, three or four wheels that are individually powered drive wheels. In one example the at least one ground engaging element 30 comprises at least one non-powered wheel. In one example the non-powered wheel is a swivel wheel. In one example, the at least one ground engaging element 30 comprises two, three, or four non-powered wheels. Any other number of non-powered wheels is possible as well. In that respect the expression individually powered relates to the fact that the wheel can be controlled in rotational direction by means of a power device, e.g. an electrical motor either through use of one electric motor per wheel or by the use of a gear box system for the respective wheel. No different meaning is intended. In one preferred embodiment the AGV 100 comprises two individually powered drive wheels and one or two non-powered wheels, e.g. one or two swivel wheels. Control of the horizontal direction of the AGV 100 is performed by varying the speed of the individually powered drive wheels.

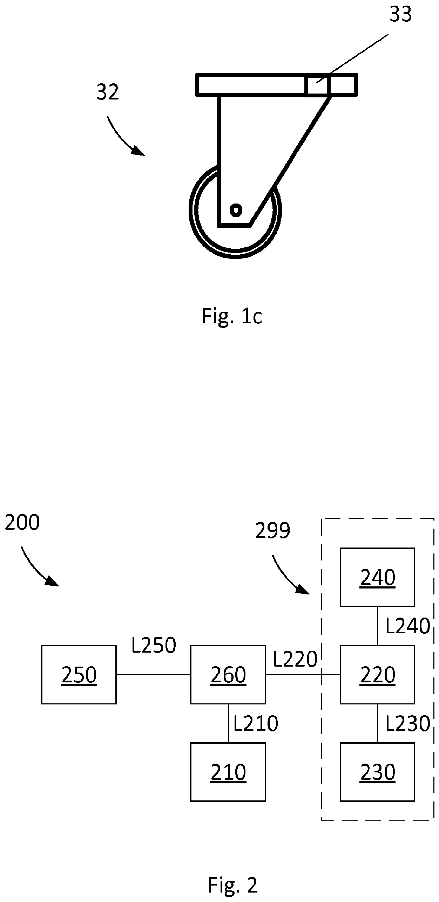

The AGV 100 comprises a main AGV body 40. The main AGV body can comprise a first drive unit 50 arranged to propel the AGV, by propelling a first individually powered drive wheel 31. The main AGV body can further comprise a second drive unit 50a that can propel a second drive wheel 31a. The main AGV body 40 can comprise a system 299 for determining a first steering angle of the AGV 100. The system 299 will be described in more detail in relation to Fig. 2. However, it should be understood that parts of the system 299 or even the whole system 299 equally well can be arranged at other parts of the AGV 100.

An AGV 100 is an autonomous vehicle that has no operator travelling with it. Thus when the AGV 100 is operating in a warehouse environment with other objects, such as manually operated fork-lifts, and human operators walking, the AGV 100 needs to be very precise when assessing what objects is in the surroundings. The method for determining a first steering angle and the systems of the present disclosure becomes very useful as there is no human interaction at all instants when the AGV 100 is moving around. Thus the present disclosure allows for directing a on object sensor, for example a camera unit 45, in a sufficiently narrow corridor for not making it difficult for the AGV 100 to move around. This means that an object sensor on the AGV 100 will focus its detected area on the next upcoming position for the AGV 100 and at the same time ignore less important areas. Less important areas could be straight ahead and straight ahead to the left if the AGV 100 is preparing a right turn forward. In this situation it is more important to detect objects that will occur in the area that is to the right in the path of the AGV 100.

Especially the AGV itself, the system for operating the AGV and method for determining a first steering angle of the present disclosure are useful as an alerted operator which can interact with the AGV in case the AGV behaves unexpectedly is no longer present. This is made by controlling the AGV remotely by a remote control panel, that is for example located on a remote control device or in a control facility for a ware house.

The term "link" refers herein to a communication link which may be a physical connection such as an opto-electronic communication line, or a non-physical connection such as a wireless connection, e.g. a radio link or microwave link.

Fig. 2 shows, in a schematic way, a system 299 for determining a first steering angle of the AGV according to an embodiment of the present disclosure. Fig. 2 further shows, in a schematic way, a system 200 for improving safety when operating an AGV according to an embodiment of the present disclosure.

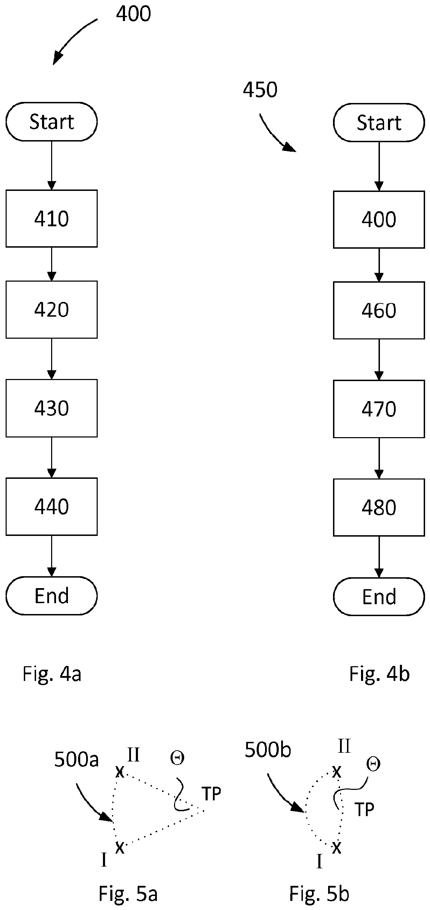

It should be understood that not all components in the depicted embodiments are necessary to perform the invention. Instead, the depicted embodiments explain the present disclosure so as to better describe one possible way of implementing the disclosure. The system 299 and/or the system 200 can be arranged to perform any of the actions described in relation to the methods of the present disclosure which are described in relation to Fig. 4.

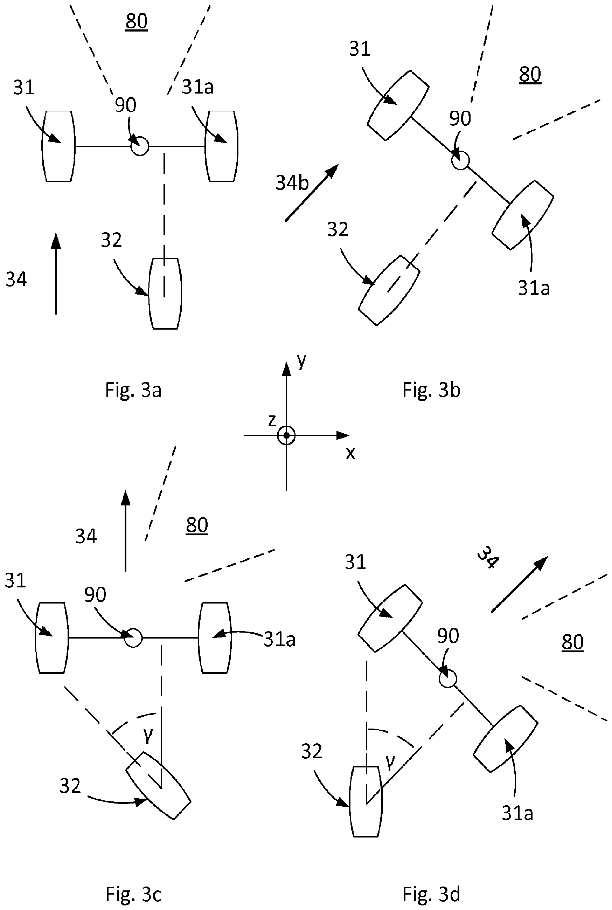

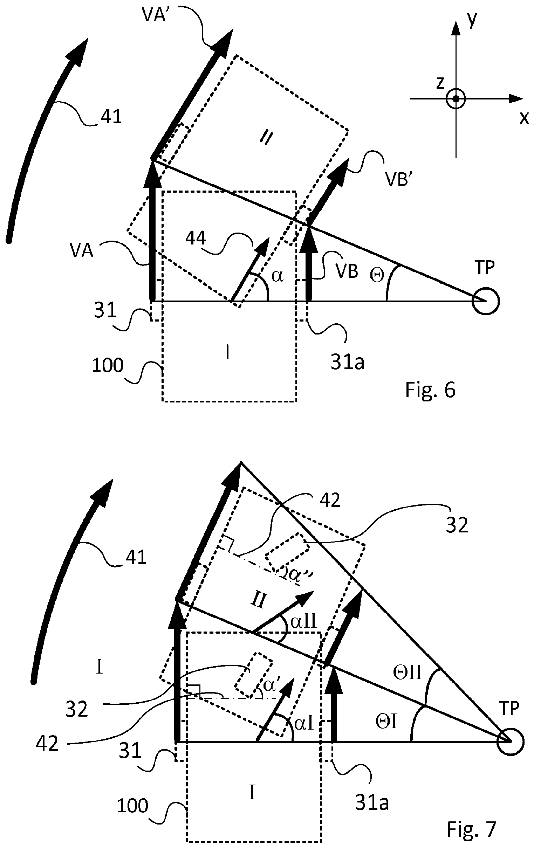

In one example, the system 299 comprises means 240 for determining a first position and a first orientation of the AGV. The means 240 can comprise a navigation unit of the AGV. The navigation unit can be arranged to determine the first position and the first orientation of the AGV. First orientation is meaning in which direction the AGV 100 would head if the AGV would proceed on a straight line from this first position. I.e. it is the orientation in which the AGV 100 is pointing at. In general this means for Fig. 3a that the first orientation 34 is straight up. Correspondingly for Figure 3b the first orientation 34b would diagonally left upwards, etc. the concept of first must be understood to depend on when a determination of orientation is set. This means that first is a theoretical expression, that could be followed by several determinations of first orientations. Also fig. 6 discloses the first orientation as position I, for the dotted line of the AGV 100. It is well known in the art how to determine a first position by a navigation unit. As an example, the navigation unit can be arranged to determine the first position via using a global navigation satellite system, GNSS, such as GPS or the like. The means 240 and/or the navigation unit can comprise a so-called laser guidance unit, LGU. The LGU can be arranged to determine the orientation of the AGV 100. As an example, the LGU can be arranged to emit laser pulses from the AGV 100. The LGU can further be arranged to detect the emitted laser pulses after they have been reflected by elements in the surrounding of the AGV 100. As an example, a storage house, e.g. ware house, in which the AGV 100 is operated can be equipped with reflective elements at the walls and/or storage elements, such as racks, in the storage house. The LGU can be arranged to determine the first orientation based on the reflected laser pulses. As an example, the LGU can be arranged to determine from which direction(s) laser pulses are reflected and/or how strong the laser pulses are reflected and/or how long time it takes until the reflected laser pulses are detected and/or whether and/or how the reflected laser pulses are modulated. The LGU can be arranged to determine the first orientation based on one, several, or all of these properties. The LGU can be arranged to determine the first position, for example based on one, several, or all of these properties. The LGU can also be arranged as a group 55a, 55 of LGU units that are situated in the lower part of the AGV 100 close to the surface on which the AGV 100 is operating. The LGU can be arranged to compare one, several, or all of these properties to a stored map for determining the first position and/or orientation. The map can comprise information regarding locations and/or properties of the reflective elements. LGU and their working principles are known in the art. However, it should be understood that the first orientation of the AGV 100 is usually not sufficient to determine a steering angle of the AGV 100. That is due to the fact that the steering angle of the AGV 100 can differ although the orientation might be the same. This can, for example, be seen when comparing Fig. 3a and Fig. 3c which will be described later.

Above, the means 240 have been mainly described in connection to a LGU. However, any other means for determining a first position and a first orientation of the AGV 100 can be used as well. As an example, the means 240 can comprise a camera unit (45) which is arranged to determine position and/or orientation based on camera images. As an example, the camera unit 45 can be arranged to determine contours of objects. The camera unit can be arranged to determine the first position and/or orientation based on the determined contours of objects. The camera unit 45 can additionally and/or alternatively be arranged to detect barcodes in the surrounding of the AGV 100, such as on the roof, at the wall, at the ground, and/or at objects in a storage house. The camera unit 45 can be arranged to determine the first position and/or orientation based on the detected barcodes. In one example, the means 240 can comprise at least one magnetic detector. The at least one magnetic detector can be arranged to detect metal and/or magnetic signatures in the surrounding of the AGV 100, such as in the ground close to the AGV 100. The means 240 can be arranged to determine the first orientation and/or position based on the detected metal and/or magnetic signatures.

The system 299 comprises means for moving the AGV 100 (not shown in the figure). The drive units for moving the AGV 100 can comprise a motor, such as an electric motor, a combustion engine, or the like. In order to control the AGV 100 there is in the case of one motor a need for a gear box system such that the powered drive wheels 31, 31a can be controlled individually. The means for moving the AGV 100 can thus comprise the first drive unit 50 and the second drive unit 50a. The means for moving the AGV 100 are arranged to move the AGV 100 from a first position to a second position, wherein the second position is different from the first position. The means for moving the AGV 100 can, alone or in combination with other elements, also cause a change in orientation of the AGV 100 when moving from the first to the second position.

It is preferred that the AGV 100 uses an electric energy source on board if the motor is electric. The energy source is preferably a battery, preferably a lead, Li-Ion, Ni-MH or any other suitable rechargeable battery.

The system 299 further comprises means for determining a second position and a second orientation of the AGV 100. These means can be the same as the means 240 for determining the first position and the first orientation of the AGV 100. They can be arranged to operate in the same way as described earlier in relation to the means 240.

The system 299 can comprise at least one sensor 230 at a wheel of the AGV 100, such as at the first individually powered drive wheel. The sensor 230 can be arranged to determine the revolutions of the wheel. The sensor 230 can be arranged to determine the distance which the wheel is travelling. The sensor 230 is preferably a rotary encoder, but other means for measuring is of course possible such as by optic measurement to the surface on which the AGV 100 is operating or an accelerometer etc.

The system 299 comprises means for determining a first steering angle of the AGV 100 based on the first position and orientation of the AGV 100 and based on the second position and orientation of the AGV 100. These means can comprise a first control unit 220. In one example, the first control unit 220 is a unit for automation control. The first control unit 220 can comprise one or more processors.

The first control unit 220 can be arranged to control operation of the at least one sensor 230. The first control unit 220 is arranged for communication with the at least one sensor 230 via a link L230. The first control unit 220 is arranged to receive information from the at least one sensor 230. The first control unit 220 can be arranged to determine the travelling distance of the AGV 100 based on the signals received from the at least one sensor 230.

The first control unit 220 can be arranged to control operation of the means 240. The first control unit 220 is arranged for communication the means 240 via a link L240. The first control unit 220 is arranged to receive information from the means 240. What has been said regarding the first control unit 220 and the means 240 applies as well to the first control unit 220 in relation to the means for determining a second position and a second orientation of the AGV 100. The first control unit 220 can be arranged to receive the first position and/or orientation of the AGV 100. The first control unit 220 can be arranged to receive the second position and/or orientation of the AGV 100.

Although the above has been described as several units, it is also possible to combine the means for determining a first steering angle of the AGV 100 based on the first position and orientation of the AGV 100 and based on the second position and orientation of the AGV 100 and the means for determining the first and/or second position and/or orientation in a single unit.

The system 200 comprises the system 299.

In one example, the system 200 comprises means 210 for determining a second steering angle of the AGV 100. The means 210 are arranged for determining the second steering angle of the AGV 100. In one example, the means 210 comprise at least one sensor, such as an angle steering angle sensor 33 for at least one non-powered wheel of the AGV 100. In one example, the at least one non-powered wheel is what is commonly known as a swivel wheel of the AGV 100, see Fig. 1c. The swivel wheel is in general arranged such that it can rotate in any direction, but due to its asymmetry between rotational centre and the support point for the wheel itself to the ground it will position itself in a stable position, i.e. angle if the steering angle (i.e. heading angle) is kept constant The means 210 are arranged to determine the second steering angle not based on the first position and the first orientation of the AGV 100. The means 210 are arranged to determine the second steering angle not based on the second position and the second orientation of the AGV 100. The exemplified AGV 100 in one example can determine an horizontal angle in relation to a predetermined direction in the operating surroundings, by using the system 240.

In one example, the system 200 comprises a second control unit 260. The second control unit 260 can comprise at least one processor. The second control unit 260 can comprise a programmable logic controller, PLC. The second control unit 260 can be arranged to control safety measures of the AGV 100.

The second control unit 260 can be arranged to control operation of the means 210. The second control unit 260 can be arranged for communication with the means 210 via a link L210. The second control unit 260 can be arranged to receive information from the means 210. The second control unit 260 can be arranged to receive the second steering angle of the AGV 100 from the means 210.

The second control unit 260 can be arranged for communication with the first control unit 220 via a link L220. The second control unit 260 can be arranged to receive information from the second control unit 220. The second control unit 260 can be arranged to receive the first steering angle of the AGV 100 from the first control unit 220.

The system 200 is described in relation with a first and a second control unit 220, 260. However, in one example the functioning of the first and the second control unit 220, 260 is combined in a single control unit.

The system 200 can comprise a personal protection system 250, PPS. The PPS 250 can be arranged to assure that the AGV 100 is operated in a safe manner for persons in the surrounding of the AGV 100. The PPS 250 can comprise a laser scanner unit, LSU (not shown). The LSU can be arranged to scan the surrounding of the AGV 100 for any potential objects and/or persons which are in the way for the AGV 100 and/or potentially can be in the way of the AGV 100. The LSU can comprise at least one laser which is arranged to perform the scanning. The LSU can be arranged to perform the scanning in a predetermined scanning area around the AGV 100, wherein the scanning area can have a pre-determined opening angle. Preferable, in case the AGV 100 is moving forward, the LSU is arranged to orient the scanning area substantially forward. Such a situation is depicted in Fig. 3a. In one example, the LSU is arranged to shift the orientation of the scanning areas, for example in predetermined steps. As an example, the LSU can be arranged to shift the orientation of the scanning area in steps of 5, 10, or 15 degrees. Preferably, the LSU is arranged to shift the orientation of the scanning area based on the determined steering angle of the AGV 100. This shifting is preferably performed in such a way that the scanning area covers the intended driving path of the AGV 100. It is, however, not necessary that the shifting of the orientation of the scanning area and the determined steering angle of the AGV 100 are exactly the same. As an example, if it is determined that the steering angle is 13 degrees and the orientation of the scanning area only can shift in steps of 5 degrees, the shifting of the orientation area might be 15 degrees in this case. Preferably, the opening angle is chosen large enough to detect objects and/or persons outside the potential driving path which might be on the way to move into the potential driving path. The PPS 250 can be arranged to perform measures when it is detected that a person and/or object is in the potential driving path of the AGV 100 and/or in the scanning area, and/or parts of the scanning area. The measures can depend on the position in the scanning area and/or the distance of the scanned persons and/or objects. Examples of measures are causing warning signals, changing of the driving direction of the AGV 100 and/or changing of the speed of the AGV 100, potentially to a stop of the AGV 100.

Above, the PPS 250 has been described in relation to a LSU. However, the PPS can comprise any other means for assuring the safety. These other means can have similar or even the same functioning as the LSU described above, for example regarding opening angles, scanning areas, and shifting of the orientation of the scanning area.

The PPS 250 and in particular the LSU can also be used for navigation purposes in some applications in the same way as described above in relation to the LGU.

The first and/or second control unit 220, 260 can be arranged for communication with the PPS 250 via a link L250. The PPS 250 can be arranged to receive information from the first and/or second control unit 220, 260. The PPS 250 can be arranged to receive the first and/or second steering angle of the AGV 100.

The system 200 comprises means for determining whether the first and the second steering angle deviates more than a pre-determined threshold. In one example, the means comprise the PPS 250. In one example, the means comprise the first and/or second control unit 220, 260.

In one example, the pre-determined threshold is a few degrees. It is generally not necessary to have a very low threshold of, for example, 1 degree or less since such deviation naturally may occur due to measurement uncertainties or the like. Further the opening angle of the scanning area and/or the steps in which the orientation of the scanning area can be shifted does usually not necessitate to know the steering angle very exactly since the opening angle has some safety margins and since the shifting of the orientation might not be possible at steps of only one degree, or the like.

The system 200 can comprise means for performing safety measures when it is determined that the first and second steering angles deviate more than a pre-determined threshold. The means can comprise the PPS 250. The means can comprise the first and/or second control unit 220, 260. The safety measures can be the same safety measures as described above.

As an example the steering angle can be an angle that is calculated based on the rotational speed v1 of the first individually powered drive wheel and the rotational speed v2 of the second individually powered drive wheel.

v1 = rotational speed of first individually powered drive wheel 31
v2 = rotational speed of second individually powered drive wheel 31a
O = circumference of first and second individually powered drive wheel 31, 31a
I1 = length of travel for first individually powered drive wheel per time unit
I2 = length of travel for second individually powered drive wheel per time unit
I1 = v1/O
I2 = v2/O

Thus the steering angle will vary as a direct function of v1/v2

if v1/v2 = 1 the AGV is moving forward
if v1 > v2 the AGV will move to the left in a curved motion if v1 < v2 the AGV will move to the right in a curved motion.

From the above discussion it must be understood that the discussed steering angle is a steering angle of a non-powered wheel. I.e. the difference in rotational speed of the two individually powered drive wheels result in a curved path that occurs with a non-powered wheel, e.g. a swivel wheel. It must be understood that a swivel wheel can when changing directions have a start of a steering angle that is not corresponding to a determined steering angle based on v1 and v2. I.e. the swivel wheel can be due to previous motion of the vehicle be positioned in a different direction than what an ensuing direction of the AGV 100 will result in. In this situation start angle of the swivel wheel does not correspond to the ensuing the steering angle of the motion. Thus any reading of an exemplified sensor on the swivel wheel would result in a faulty determination of the steering angle. Thus the steering angle based on v1 and v2 should be overriding any start steering angle of any sensor provided to the non-powered wheel.

The rotational speeds are as an example determined by a rotational sensor 35, 35a, see fig 1a, b. The rotational sensor or sensors 35, 35a thus determines the achieved value of rotation of a individually powered drive wheel. This can of course differ from a set value of the rotational speed.

To explain this more in an alternative way, it the steering angle can be instead explained by the heading angle α, see Fig. 6 and 7. The heading angle α and the steering angle are of course related to each other, as the steering angle is merely explained in an alternative way by referring to a heading angle as explained below. Figure 6 refers to a heading angle α. The first position I is also representing an orientation of the AGV 100 parallel with the y-axis. The angle α is representing the orientation of the vehicle 100 based on the difference between the speed VA, VB of the different individually powered drive wheels 30 31. Thus between a first position I and a second position II of the vehicle 100, the heading angle α is determined as the difference in orientation between the first position I and the second position II. In the second position II the orientation is between the y-axis and the x-axis in parallel with arrow 44. In the exemplified movement according to Fig. 6, a turning point TP is defined. In a movement from the first position I to the second position II, an angle Θ around the turn point TP is travelled by the AGV 100. The angle Θ is proportional to the heading angle α. The calculation of the angle Θ is made based on the different speeds of the wheels 31 and 31a. With speed VA and VB are here meant the movement per time unit of the position of the wheel in respect of the surface it is supported on. Thus it is not the rotational speed of the wheel as discussed above. The following parameters is used for this disclosure:

VA = Speed for individually powered drive wheel 31

VB = Speed for individually powered drive wheel 31a

Wb = the distance between the individually powered drive wheels, wheel base.

TP = turn point for the path that the vehicle is pursuing.

$$\text{The Truck speed} = (|VA| + |VB|)/2$$

$$\Theta = \arctan((|VA| - |VB|) / Wb)$$

Heading angle proportional mot θ.

$$\alpha = 90° - \Theta/2$$

Thus the heading angle α is very easily calculated between the first position I and the second position II.

It should be understood that the heading angle α is having the same value for a movement along a path 41 where VA and VB do not alter value, for same values of Θ. The relationship between the steering angle and the heading angle will be an equality, as can be seen in Fig. 7. From Fig. 7 it is understood that how a theoretical steering wheel 32, in the form of a dotted swivel wheel 32 would be angled for a movement form position I to position II. In position I the wheel 32 has a steering angle of α', this angle α' is equal of the heading angle αI. The line 42 setting the angle α' with regard to the theoretical steering wheel 32 is a transversal perpendicular to the longitudinal axis 13 of the AGV 100.

Thus in terms of the invention the steering angle and the heading angle is to be construed as giving the same result in terms of path 41 and are merely used for explanation of the same concept. Thus for all embodiments steering angle is interchangeable with heading angle.

Fig. 3a-d show, in a schematic way, the possible orientation of wheels of an embodiment of an AGV. Fig. 3a-d are views directly from the top. It should be emphasised that the figures are only schematic for illustrating the working principle of the present disclosure. Thus, as an example, the size of different elements and the distance between elements might not be at the same scale.

The depicted AGV has three wheels. The depicted AGV comprises one link wheel 30 and two individually powered drive wheels 31, 31a which are individually controllable by means of a first and second drive unit 50, 50a. However, this is only an example and the present disclosure is applicable to AGVs with any numbers of non-powered and individually powered drive wheels. A scanning area 80 (partly delimited by the two dashed lines in each of the figures) with an opening angle (defined by the two dashed lines in each of the figures) is depicted as well. This scanning area 80 and the opening angle have been described in more detail in relation to Fig. 2. They are only depicted in a schematic way and may differ in a specific implementation, for example by size, position, and/or opening angle. Please note that the link wheel is disclosed as when stabilized in the movement of the AGV, and thus the situation of start of movement of the AGV has already occurred, and the link wheel has a stable steering angle fully corresponding to differences in speed of the two individually powered drive wheels.

The concept of stable steering angle for a non-powered wheel can be determined as an angle of the non-powered wheel in relation to a longitudinal axis 13 of the AGV 100, Fig. 1a. The longitudinal axis 13 of the AGV 100 is in general perpendicular to the axis 12 of the individually powered drive wheels of the AGV 100. The angle is determined as stated when the swivel wheel is in a stable configuration. The stable configuration is preferably set as the angle to the longitudinal axis achieved after a predetermined time t. The predetermined time t is in general set to a short time period based on how long the stabilisation phase takes for the swivel wheel. t can for example be comprised in the time range of 1/10 to 2s seconds. More preferred to 1/10 to 1 seconds. The time period t starts when a new value to the quote v1/v2 is set by the AGV 100.

A further discussion on steering angle will now follow, we here use γ as denomination but steering angle is still the same concept. A steering angle γ determines in which direction the AGV is moving. A centre of rotation 90 determines around which point the AGV is rotating. The figures 3a-d have a common coordinate system. In Fig. 3a the steering angle γ is zero and the AGV is moving solely in the y-direction. The scanning area is oriented in the driving direction. Fig. 3b depicts the same situation as in Fig. 3a, except that the AGV is now oriented in a different direction. Fig. 3c depicts the AGV oriented as in Fig. 3a. However, now the steering angle γ is not zero. As a consequence, the AGV will not move solely in the y-direction but will instead move in a curve away from the y-direction. As a consequence, the scanning area has been shifted in its orientation compared to Fig. 3a. The scanning area has not to be shifted exactly by the same angle γ as the steering angle. This has been described above in relation to Fig. 2. Fig. 3d depicts the same situation as in Fig. 3c, except that the AGV is oriented differently in the coordinate system. As an example, in case the AGV is starting with orientation as in Fig. 3c, the AGV will eventually arrive at the orientation depicted in Fig. 3d in case the steering angle is kept constant.

Fig. 4a-b show, in a schematic way, flowcharts of examples of methods according to the present invention. The methods can be applied to any kind of AGVs, especially those described in connection to Fig. 1a-3. The methods are especially suitable for AGVs. The described methods can comprise any of the actions which the elements described in relation to Fig. 1a-3 are arranged or configured to. Conversely, the elements described in relation to Fig. 1a-3 can be arranged or configured to perform the method steps described in relation to Fig. 4a-b.

Fig. 4a depicts a flowchart of a method 400 for determining a first steering angle of an AGV. The method starts with step 410.

In step 410 a first position and a first orientation of the AGV is determined. This can be performed by a navigation unit. Step 410 can comprise emitting laser pulses. Step 410 can comprise detecting reflected laser pulses. Step 410 can comprise analysing detected laser pulses, for example regarding time of flight, modulation, or the like. The determining of a first position and/or a first orientation can comprise using an inertial measurement unit, IMU, using a global navigation satellite system, GNSS, and/or using a camera system to analyse the surrounding of the AGV. Step 410 can comprise comparing information regarding the detected laser pulses and/or regarding images of the camera system with pre-stored information regarding the surrounding of the AGV. This pre-stored information can, for example, comprise position, orientation, reflection properties, or the like, of objects in the surrounding of the AGV. Examples of such objects are reflective elements, barcodes, placement of storing arrangements, or the like. For comparing, step 410 can comprise sending and/or receiving information to a system comprising the pre-stored information. The system comprising the pre-stored information can be aboard the AGV, outside the AGV, or partly aboard and partly outside the AGV. The method continues with step 420.

In step 420 the AGV is moved. This can be achieved by any means to move the AGV, such as a combustion engine, an electric motor, or the like. This step is performed to assure that not both the second orientation and the second position, which will be described soon, do coincide with the first orientation and the first position. The method 400 can comprise the step of waiting a first pre-determined time period between step 410 and step 430. That first pre-determined time period can, for example, be 1, 2, 3, 4, or 5 seconds. In one example, it is determined whether the AGV has been moved during that first pre-determined time period. The method 400 is in one example aborted and/or restarted in case the AGV is not moved during the first pre-determined time period. In one example, the waiting time period is prolonged in case the first pre-determined time period has been passed without moving the AGV. The prolongation of time period can equal the first pre-determined time period or be any other suitable time period. It can then be determined whether the AGV has moved during the prolonged time period. If the AGV has been moved, the method can continue with step 430, otherwise the method can be prolonged repeatedly until a movement is detected.

In one example, step 420 comprises determining the distance which the AGV moves. It should be emphasised that the distance which the AGV moves is not necessarily the mere distance between the first and the second position. These two distances usually only coincide in case the AGV moves in a straight line from the first to the second position. However, in case the AGV moves on a curved line, the two distances usually do not coincide. After step 420, the method continues with step 430.

Step 430 comprises determining a second position and a second orientation of the AGV. This can be performed in the same manner as described in relation to step 410. Due to the movement of the AGV, at least one of the second position and the second orientation will deviate from the first position and the first orientation of the AGV. In a preferred example, the second position and the second orientation of the AGV are determined in the same way as the first position and the first orientation. This has the advantage that resources are reused and might thus, for example, lower cost and/or weight of the AGV. However, this is not a requirement. In principle, the second position and the second orientation can be determined differently than the first position and orientation. After step 430 the method continues with step 440.

In step 440 a first steering angle of the AGV is determined based on the first position and orientation of the AGV and based on the second position and orientation of the AGV. This can be exemplified with the help of Fig. 3a-d. In one example, the AGV is oriented as in Fig. 3a both at the first and at the second position, wherein the first and the second position are not the same. It can then be concluded that the steering angle $\gamma$ is zero since the orientation has not changed between the different orientations 34. In another example, the AGV is oriented as in Fig. 3c at the first position and as in Fig. 3d at the second position. It should be emphasised that the term orientation of the AGV relates not to the orientation of the swivel wheel 32, but instead of the orientation of the AGV body or the like. In relation to Fig. 1a-b and 3a-d the orientation of the AGV coincides with the orientation of the individually powered drive wheels 31, 31a. Turning back to the example of Fig. 3 c and d regarding first and second orientation, it can be concluded that the steering angle $\gamma$ is not zero since the orientation has changed between the first and the second position. For determining the steering angle it is, however, not enough to only look at the difference in the orientation. As an example, the first and the second orientation might differ by $\beta=20$ degrees. This does by no means mean that the steering angle is 20 degrees as well. Assuming that the first and the second position differ by 1 metre and the first and the second orientation differ by β, means that the steering angle γ is larger as if the first and the second position would differ by 2 metres and the first and the second orientation differ by the same amount β.

Other examples are given in relation to Fig. 5a-b. Therein, the first "I" and the second "II" position, each marked by the letter "x" differ by the same amount in each of the figures. TP represents turn point. Θ represent the same as referred to in Fig. 6 and 7 above. The first position is assumed to be the lower "x" (I) and the second position is assumed to be the upper "x" (II). The driving path is denoted by 500a, b, respectively and is in this example assumed to be comprised of circular arc(s). In Fig. 5a and b the driving path 500a, b, respectively, consist of one circular arc. For emphasising the differences, not only the circular arcs but also the slices defined by the circular arcs are depicted in the figures. As can be seen, the driving path differs substantially between the two figures although the first and the second positions are identical. The driving path 500b in Fig. 5b is longer than the driving path 500a in Fig. 5a. Since the driving paths in these figures consist of circular arcs, the steering angle γ is larger in Fig. 5b compared to Fig. 5a. The circular arc, and thus the steering angle, can in these cases thus only be determined by using the orientations in addition to the positions. The first and the second orientation of the AGV will differ between Fig. 5a and 5b. The AGV is oriented basically upwards in the first and second orientation in Fig. 5a, whereas the AGV is oriented basically to the left and to the right, respectively, in the first and second orientation in Fig. 5b.

For further explanation in relation to Fig. 5a-5b, the dotted lines curved lines represent the different pathways the wheels have travelled in a transition from one x to the next x, one curve in Fig. 5a and one curve in Fig. 5b. So the different paths travelled by the wheels is used for determining the actual distance travelled, i.e. the straight line between lower x and higher x is the same for both Fig. 5a and Fig. 5b but the distance very different. This correspond to the need of knowing the orientation of in the two positions x, both in Fig. 5a and Fig. 5b, in order to be able to compare and determine the steering angle.

After step 440 the method ends. The method 400 can be performed repeatedly, for example after a pre-determined time-schema. In one example, the method 400 is repeated around every 1, 2, 3, 4, or 5 seconds.

Above, it has been described that the method can be repeated after a pre-determined time period or that the waiting step can be during a pre-determined time period. Alternatively, or additionally, the waiting can be performed for a pre-determined length of the travel path of the AGV, and/or the method can be repeated after a pre-determined length of the travel path of the AGV. The length is preferably chosen in such a way that the steering angle does not alter substantially during the travel path. In one example, the length is around 0.3 metre. The length of the travel path can be determined via a sensor counting the revolutions of a wheel of the AGV, such as sensor 230 described in relation to Fig. 2. In one example the length of the travel path is determined by a navigation system.

Fig. 4b describes a method 450 for improving safety when operating an AGV. The method starts with step 400 of determining a first steering angle which has been described in relation to Fig. 4a. The method continues with step 460.

In step 460 a second steering angle of the AGV is determined. The determining of the second steering angle is not based on the first position and orientation of the AGV. The determining of the second steering angle is not based on the second position and orientation of the AGV. After step 460 the method continues with step 470.

In step 470 it is determined whether the first and the second steering angle deviate more than a pre-determined threshold. The pre-determined threshold can, for example, be one or a few degrees. This has been described in more details in relation to Fig. 2. The method continues with step 480.

In step 480 safety measures are performed when it is determined that the first and second steering angles deviate more than a pre-determined threshold. Examples of safety measures are lowering the speed of the AGV, stopping a movement of the AGV, emitting a warning signal, or the like. After step 480 the method 450 ends.

AGV-s are usually already equipped with a navigation unit, or any other of the means 240 described in relation to Fig. 2. By reusing these means for a different purpose than their main intention, namely by reusing them for determining a first steering angle, a functioning control of a sensor for an steering angle can be provided without additional equipment, especially without the need of a second sensor for a steering angle, e.g. a second navigation unit, a second sensor for determining the rotational speed of an individually powered drive wheel, or a sensor for determining a steering angle based on the angle of a swivel wheel when stabilized in a movement of the AGV.

The assuring of the proper functioning is especially useful for autonomous AGVs as they do not have a human driver which can directly interact in case the AGV behaves unexpected.

The methods 400 and 450 have been described in a specific order. However, as long as one step does not necessarily require the input of another step, the steps can be performed in any other order as well. The steps can also be performed in parallel.

Any of the methods 400 and 450 can be part of a computer program product comprising instructions which, when the program is executed by a computer, cause the computer to carry out the corresponding method. Herein, the term computer can relate to a dedicated computer and/or to one or more control units of the AGV, such as the first and/or second control unit described in relation to Fig. 2.

Different examples and embodiments of the present disclosure can be combined to arrive at further examples and embodiments within the limitations of the claims.

**Claims**

1. A method (400) for determining a first steering angle ($\alpha$, $\alpha'$; $\alpha$I; $\gamma$) of an AGV (100), the method comprising the steps of:

   - determining (410) a first position (I) and a first orientation of the AGV (100);
   - moving (420) the AGV (100);
   - determining (430) a second position (II) and a second orientation of the AGV (100); and
   - determining (440) a first steering angle ($\alpha$, $\alpha$I; $\alpha'$; $\gamma$) of the AGV (100) based on the first position and orientation of the AGV (100) and based on the second position (II) and orientation of the AGV (100).

2. The method (400) according to the previous claim, wherein the first position (I) and/or the first orientation is determined via a navigation unit of the AGV (100), preferably the second position (II) and/or the second orientation is also determined via a navigation unit of the AGV (100).

3. A method (450) for improving safety when operating an AGV (100), the method comprising the steps of:

   - determining (400) a first steering angle ($\alpha$, $\alpha$I; $\alpha'$; $\gamma$) according to any of the previous claims;
   - determining (460) a second steering angle ($\alpha$II; $\alpha''$; $\gamma$) of the AGV (100), wherein the determining of the second steering angle ($\alpha$II; $\alpha''$; $\gamma$) is not based on the first position (I) and orientation of the AGV and the second position (II) and orientation of the AGV (100);
   - determining (470) whether the first ($\alpha$, $\alpha$I; $\alpha'$; $\gamma$) and the second steering angle ($\alpha$II, $\alpha''$; $\gamma$) deviate more than a pre-determined threshold.

4. The method (450) according to claim 3, further comprising the steps of:

   - performing (480) safety measures when it is determined that the first ($\alpha$, $\alpha$I; $\alpha'$; $\gamma$) and second steering angles ($\alpha$II; $\alpha'$; $\gamma$) deviate more than a pre-determined threshold.

5. The method (400) of any of the claims above, wherein the steering angle is corresponding to an angle of a non-powered wheel (32) to a transversal line (42), when the wheel (32) is not altering angle over a predetermined time period t, preferably t is comprised in the range of 1/10 to 2 seconds, preferably time period t starts when a new value for a rotational speed quote is set between the rotating speeds (v1, v2) of two individually powered drive wheels (31, 31a).

6. A system (299) for determining a first steering angle ($\alpha$, $\alpha$I; $\alpha'$; $\gamma$) of an AGV (100), the system comprising:

   - means (240) for determining a first position (I) and a first orientation of the AGV (100);
   - means for moving the AGV (100);
   - means (240) for determining a second position and a second orientation of the AGV (100); and
   - means (220) for determining a first steering angle ($\alpha$, $\alpha$I; $\alpha'$; $\gamma$) of the AGV (100) based on the first position (I) and orientation of the AGV (100) and based on the second position (II) and orientation of the AGV (100).

7. The system (299) according to claim 6, wherein said means (220) for determining a first position (I) and a first orientation of the AGV (100) comprise a navigation unit, preferably said means (220) for determining a second position (II) and a second orientation of the AGV comprises a navigation unit.

8. The system (299) according to any of the claims 6-7, wherein said means (240) for determining a first steering angle of the AGV (100) based on the first position and orientation of the AGV (100) and based on the second position and orientation of the AGV (100) comprise a at least one processor being arranged to determine said first steering angle ($\alpha$, $\alpha$I; $\alpha'$; $\gamma$).

9. A system (200) for improving safety when operating an AGV (100), the system comprising:

   - a system (299) for determining a first steering angle ($\alpha$, $\alpha$I; $\alpha'$; $\gamma$) of an AGV (100) according to any of the claims 7-10;
   - means (210) for determining a second steering angle ($\alpha$II; $\alpha''$; $\gamma$) of the AGV (100), wherein the determining of the second steering angle ($\alpha$II; $\alpha''$; $\gamma$) is not based on the first position (I) and orientation of the AGV (100) and the second position (II) and orientation of the AGV (100);
   - means (260) for determining whether the first and the second steering angle (($\alpha$II; $\alpha''$; $\gamma$) deviate more than a pre-determined threshold.

10. The system (200) according to claim 9, wherein said means (210) for determining a second steering angle of the AGV (100) comprise a rotational sensor for at least one wheel (31) of the AGV (100), or wherein said means (210) for determining a second steering angle of the AGV comprise a steering angle sensor (33) for at least one non-powered wheel (32), preferably a swivel wheel, of the AGV (100).

11. The system (200) according to anyone of claims 9-10, wherein said means (260) for determining whether the first ($\alpha$, $\alpha$I; $\alpha$'; $\gamma$) and the second steering angle ($\alpha$II; $\alpha$"; $\gamma$) deviate more than a pre-determined threshold comprise at least one processor.

12. The system (200) according to anyone of the claims 9-11, further comprising means (250) for performing safety measures when it is determined that the first ($\alpha$, $\alpha$I; $\alpha$'; $\gamma$) and second steering angles ($\alpha$II; $\alpha$"; $\gamma$) deviate more than a pre-determined threshold.

13. An AGV (100), comprising the system according to anyone of claims 6-12.

14. A computer program product comprising instructions which, when the program is executed by a computer, cause the computer to carry out the method according to anyone of claim 1-5, preferably said computer program product comprises a computer readable medium comprising said program.

**Patentansprüche**

1. Verfahren (400) zum Bestimmen eines ersten Lenkwinkels (a, a';al; $\gamma$) eines AGV's (100), wobei das Verfahren die folgenden Schritte umfasst:

   - Bestimmen (410) einer ersten Position (I) und einer ersten Ausrichtung des AGV's (100);
   - Bewegen (420) des AGV's (100);
   - Bestimmen (430) einer zweiten Position (II) und einer zweiten Ausrichtung des AGV's (100); und
   - Bestimmen (440) eines ersten Lenkwinkels (a, al; a'; $\gamma$) des AGV's (100) basierend auf der ersten Position und Ausrichtung des AGV's (100) und basierend auf der zweiten Position (II) und Ausrichtung des AGV's (100).

2. Verfahren (400) nach dem vorhergehenden Anspruch, wobei die erste Position (I) und/oder die erste Ausrichtung über eine Navigationseinheit des AGV's (100) bestimmt wird, vorzugsweise die zweite Position (II) und/oder die zweite Ausrichtung auch über eine Navigationseinheit des AGV's (100) bestimmt wird.

3. Verfahren (450) zur Verbesserung der Sicherheit beim Betrieb eines AGV's (100), wobei das Verfahren die folgenden Schritte umfasst:

   - Bestimmen (400) eines ersten Lenkwinkels (a, al; a'; $\gamma$) nach einem der vorhergehenden Ansprüche;

   - Bestimmen (460) eines zweiten Lenkwinkels (all; a"; $\gamma$) des AGV's (100), wobei das Bestimmen des zweiten Lenkwinkels (all; a"; $\gamma$) nicht auf der ersten Position (I) und Ausrichtung des AGV's und der zweiten Position (II) und Ausrichtung des AGV's (100) basiert;
   - Bestimmen (470), ob der erste (a, al; a'; $\gamma$) und der zweite Lenkwinkel (all; a"; $\gamma$) um mehr als einen vorbestimmten Schwellenwert abweichen.

4. Verfahren '(450) nach Anspruch 3, ferner umfassend die folgenden Schritte:

   - Durchführen (480) von Sicherheitsmaßnahmen, wenn bestimmt wird, dass der erste (a, al; a'; $\gamma$) und der zweite Lenkwinkel (all; a'; $\gamma$) um mehr als einen vorbestimmten Schwellenwert abweichen.

5. Verfahren (400) nach einem der vorhergehenden Ansprüche, wobei der Lenkwinkel einem Winkel eines nicht angetriebenen Rads (32) bezüglich einer Transversallinie (42) entspricht, wenn das Rad (32) seinen Winkel über einen vorgegebenen Zeitraum t nicht ändert, vorzugsweise t im Bereich von 1/10 bis 2 Sekunden liegt, vorzugsweise der Zeitraum t beginnt, wenn ein neuer Wert für die Drehzahl zwischen den Drehzahlen (v1, v2) von zwei einzeln angetriebenen Antriebsrädern (31, 31a) angegeben wird.

6. System (299) zum Bestimmen eines ersten Lenkwinkels (a, al; a'; $\gamma$) eines AGV's (100), wobei das System Folgendes umfasst:

   - Mittel (240) zum Bestimmen einer ersten Position (I) und einer ersten Ausrichtung des AGV's (100);
   - Mittel zum Bewegen des AGV's (100);
   - Mittel (240) zum Bestimmen einer zweiten Position und einer zweiten Ausrichtung des AGV's (100); und
   - Mittel (220) zum Bestimmen eines ersten Lenkwinkels (a, al; a'; $\gamma$) des AGV's (100) basierend auf der ersten Position (I) und Ausrichtung des AGV's (100) und basierend auf der zweiten Position (II) und Ausrichtung des AGV's (100).

7. System (299) nach Anspruch 6, wobei die Mittel (220) zum Bestimmen einer ersten Position (I) und einer ersten Ausrichtung des AGV's (100) eine Navigationseinheit umfassen, vorzugsweise die Mittel (220) zum Bestimmen einer zweiten Position (II) und einer zweiten Ausrichtung des AGV's eine Navigationseinheit umfassen.

8. System (299) nach einem der Ansprüche 6-7, wobei die Mittel (240) zum Bestimmen eines ersten Lenkwinkels des AGV's (100) basierend auf der ersten Position und Ausrichtung des AGV's (100) und basierend auf der zweiten Position und Ausrichtung des AGV's (100) mindestens einen Prozessor umfassen, der zum Bestimmen des ersten Lenkwinkels (a, αI; α'; γ) vorgesehen ist.

9. System (200) zur Verbesserung der Sicherheit beim Betrieb eines AGV's (100), wobei das System Folgendes umfasst:

   - ein System (299) zum Bestimmen eines ersten Lenkwinkels (α, αI; α'; γ) eines AGV's (100) nach einem der Ansprüche 7-10;
   - Mittel (210) zum Bestimmen eines zweiten Lenkwinkels (αII; α"; γ) des AGV's (100), wobei das Bestimmen des zweiten Lenkwinkels (αII; α"; γ) nicht auf der ersten Position (I) und Ausrichtung des AGV's (100) und der zweiten Position (II) und Ausrichtung des AGV's (100) basiert;
   - Mittel (260) zum Bestimmen, ob der erste und der zweite Lenkwinkel ((αII; α"; γ) um mehr als einen vorbestimmten Schwellenwert abweichen.

10. System (200) nach Anspruch 9, wobei die Mittel (210) zum Bestimmen eines zweiten Lenkwinkels des AGV's (100) einen Rotationssensor für zumindest ein Rad (31) des AGV's (100) umfassen, oder wobei die Mittel (210) zum Bestimmen eines zweiten Lenkwinkels des AGV's einen Lenkwinkelsensor (33) für zumindest ein nicht angetriebenes Rad (32), vorzugsweise ein Schwenkrad, des AGV's (100) umfassen.

11. System (200) nach einem der Ansprüche 9-10, wobei die Mittel (260) zum Bestimmen, ob der erste (α, αI; α'; γ) und der zweite Lenkwinkel (αII; α"; γ) um mehr als einen vorbestimmten Schwellenwert abweichen, mindestens einen Prozessor umfassen.

12. System (200) nach einem der Ansprüche 9-11, ferner umfassend Mittel (250) zum Durchführen von Sicherheitsmaßnahmen, wenn bestimmt wird, dass der erste (α, αI; α'; γ) und der zweite Lenkwinkel (aII; a"; γ) um mehr als einen vorbestimmten Schwellenwert abweichen.

13. AGV (100), umfassend das System nach einem der Ansprüche 6-12.

14. Computerprogrammprodukt umfassend Anweisungen, die, wenn das Programm von einem Computer ausgeführt wird, den Computer veranlassen, ein Verfahren nach einem der Ansprüche 1-5 durchzuführen, vorzugsweise wobei das Computerprogrammprodukt ein computerlesbares Medium umfassend das Programm umfasst.

## Revendications

1. Procédé (400) pour déterminer un premier angle de braquage (a, a';al; γ) d'un AGV (100), le procédé comprenant les étapes consistant à :

   - déterminer (410) une première position (I) et une première orientation de l'AGV (100) ;
   - déplacer (420) l'AGV (100) ;
   - déterminer (430) une deuxième position (II) et une deuxième orientation de l'AGV (100) ; et
   - déterminer (440) un premier angle de braquage (a, al; a'; γ) de l'AGV (100) sur la base de la première position et de la première orientation de l'AGV (100) et sur la base de la deuxième position (II) et de la deuxième orientation de l'AGV (100).

2. Procédé (400) selon la revendication précédente, dans lequel la première position (I) et / ou la première orientation est déterminée via une unité de navigation de l'AGV (100), de préférence la deuxième position (II) et / ou la deuxième orientation est également déterminée via une unité de navigation de l'AGV (100).

3. Procédé (450) pour améliorer la sécurité lors de l'utilisation d'un AGV (100), le procédé comprenant les étapes consistant à :

   - déterminer (400) un premier angle de braquage (a, al; a'; γ) selon l'une quelconque des revendications précédentes ;
   - déterminer (460) un deuxième angle de braquage (αII; α"; γ) de l'AGV (100), la détermination du deuxième angle de braquage (αII; a"; γ) n'étant pas basée sur la première position (I) et la deuxième orientation de l'AGV et la deuxième position (II) et la deuxième orientation de l'AGV (100) ;
   - déterminer (470) si les premier (a, al; a'; γ) et deuxième (αII, α"; γ) angles de braquage s'écartent plus qu'un seuil prédéterminé.

4. Procédé (450) selon la revendication 3, comprenant en outre les étapes consistant à :

   - exécuter (480) des mesures de sécurité lorsqu'il est déterminé que les premier (a, al; a'; γ) deuxième (αII; a'; γ) angles de braquage s'écartent plus qu'un seuil prédéterminé.

5. Procédé (400) selon l'une quelconque des revendications précédentes, dans lequel l'angle de braquage correspond à un angle d'une roue non motorisée (32) par rapport à une ligne transversale (42), lorsque la roue (32) ne modifie pas l'angle sur une période de temps prédéterminée t, de préférence t est comprise dans la plage de 1/10 à 2 secondes, de préférence la période de temps t commence lorsqu'une nouvelle valeur pour un devis de vitesse de rotation est définie entre les vitesses de rotation (v1, v2) de deux roues d'entraînement à alimentation individuelle (31, 31a).

6. Système (299) pour déterminer un premier angle de braquage (a, al; a'; $\gamma$) d'un AGV (100), le système comprenant :

   - des moyens (240) pour déterminer une première position (I) et une première orientation de l'AGV (100) ;
   - des moyens pour déplacer l'AGV (100) ;
   - des moyens (240) pour déterminer une deuxième position et une deuxième orientation de l'AGV (100) ; et
   - des moyens (220) pour déterminer un premier angle de braquage (a, al; a'; $\gamma$) de l'AGV (100) sur la base de la première position (I) et de la première orientation de l'AGV (100) et sur la base de la deuxième position (II) et de la deuxième orientation de l'AGV (100).

7. Système (299) selon la revendication 6, dans lequel lesdits moyens (220) pour déterminer une première position (I) et une première orientation de l'AGV (100) comprennent une unité de navigation, de préférence lesdits moyens (220) pour déterminer une deuxième position (II) et une deuxième orientation de l'AGV comprennent une unité de navigation.

8. Système (299) selon l'une quelconque des revendications 6 à 7, dans lequel lesdits moyens (240) pour déterminer un premier angle de braquage de l'AGV (100) sur la base de la première position et de la première orientation de l'AGV (100) et sur la base de la deuxième position et de la deuxième orientation de l'AGV (100) comprennent au moins un processeur étant agencé pour déterminer ledit premier angle de braquage (a, al; a'; $\gamma$).

9. Système (200) pour améliorer la sécurité lors de l'utilisation d'un AGV (100), le système comprenant :

   - un système (299) pour déterminer un premier angle de braquage (a, al; a'; $\gamma$) d'un AGV (100) selon l'une des revendications 7 à 10 ;
   - des moyens (210) pour déterminer un deuxième angle de braquage ($\alpha$II; $\alpha$"; $\gamma$) de l'AGV (100), la détermination du deuxième angle de braquage ($\alpha$II; a"; $\gamma$) n'étant pas basée sur la première position (I) et la première orientation de l'AGV (100) et la deuxième position (II) et la deuxième orientation de l'AGV (100) ;
   - des moyens (260) pour déterminer si le premier et le deuxième angle de braquage (($\alpha$II; a"; $\gamma$) s'écartent de plus qu'un seuil prédéterminé.

10. Système (200) selon la revendication 9, dans lequel lesdits moyens (210) pour déterminer un deuxième angle de braquage de l'AGV (100) comprennent un capteur de rotation pour au moins une roue (31) de l'AGV (100), ou dans lequel lesdits moyens (210) pour déterminer un deuxième angle de braquage de l'AGV comprennent un capteur d'angle de braquage (33) pour au moins une roue non motorisée (32), de préférence une roue pivotante, de l'AGV (100).

11. Système (200) selon l'une quelconque des revendications 9 à 10, dans lequel lesdits moyens (260) pour déterminer si les premier (a, al; a'; $\gamma$) et deuxième ($\alpha$II; $\alpha$"; $\gamma$) angles de braquage s'écartent de plus qu'un seuil prédéterminé comprennent au moins un processeur.

12. Système (200) selon l'une quelconque des revendications 9 à 11, comprenant en outre des moyens (250) pour effectuer des mesures de sécurité lorsqu'il est déterminé que les premier (a, al; a'; $\gamma$) et deuxième ($\alpha$II; a"; $\gamma$) angles de braquage s'écartent de plus d'un seuil prédéterminé.

13. AGV (100), comprenant le système selon l'une quelconque des revendications 6 à 12.

14. Produit de programme informatique comprenant des instructions qui, lorsque le programme est exécuté par un ordinateur, amènent l'ordinateur à exécuter le procédé selon l'une quelconque des revendications 1 à 5, de préférence ledit produit de programme informatique comprend un support lisible par ordinateur comprenant ledit programme.

Fig. 1a

Fig. 1b

Fig. 1c

Fig. 2

Fig. 3a

Fig. 3b

Fig. 3c

Fig. 3d

400

Start

410

420

430

440

End

Fig. 4a

450

Start

400

460

470

480

End

Fig. 4b

500a

II

Θ

TP

I

Fig. 5a

500b

II

Θ

TP

I

Fig. 5b

Fig. 6

Fig. 7

**EP 3 495 246 B2**

## REFERENCES CITED IN THE DESCRIPTION

**Patent documents cited in the description**

- US 5764014 A